(19) Europäisches Patentamt
European Patent Office
Office européen des brevets

(11) **EP 1 777 525 A1**

(12) **EUROPÄISCHE PATENTANMELDUNG**

(43) Veröffentlichungstag:
**25.04.2007 Patentblatt 2007/17**

(21) Anmeldenummer: 06022090.2

(22) Anmeldetag: **20.10.2006**

(51) Int Cl.:
*G01P 3/487* (2006.01)          *G01P 3/488* (2006.01)
*G01P 3/46* (2006.01)           *H02K 23/66* (2006.01)
*H02K 29/14* (2006.01)          *H02K 29/12* (2006.01)
*G01D 5/20* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **20.10.2005 DE 102005050670**

(71) Anmelder: **Helmut-Schmidt-Universität 22043 Hamburg (DE)**

(72) Erfinder: **Ekkehard, Bolte, Prof. Dr.-Ing. 22929 Rausdorf (DE)**

(74) Vertreter: **Schupfner, Georg**
**Müller Schupfner**
**Patentanwälte**
**Parkstrasse 1**
**21244 Buchholz (DE)**

(54) **Messeinheit zur Messung von Position und Drehzahl des Rotors einer elektrischen Maschine**

(57)     Die Erfindung bezieht sich auf eine Messeinheit zur Messung von Bewegungen im Luftspalt zwischen einem sich bewegenden Maschinenteil (1) und einem zugehörigen stillstehenden Maschinenteil (5) einer fremderregten elektrischen Maschine, insbesondere zur Messung von Bewegungen des sich bewegenden Maschinenteils (1) im Luftspalt (2) zwischen ihm und dem stillstehenden Maschinenteil (5) einer Rotations- oder Linearmaschine. Die Messeinheit besteht aus einer im Luftspalt (2) angeordneten Schaltungsfolie (6), die mit einer Wicklung versehen ist, die als Messwicklung wirkt, indem vom sich bewegenden Maschinenteil (1) in sie induzierte Messdaten zur Steuerung bzw. Regelung der Bewegungen eingesetzt werden, eine fremderregte elektrische Maschine aufweisend die Messeinheit und die Verwendung der Messeinheit zur Bestimmung der Rotorposition und/oder der Drehzahl.

Die Wicklungen können Spiralform aufweisen.

Mehrere Wicklungen können zur Signalverstärkung in Serie angeordnet sein.

Die Wicklungen können in mehreren Gruppen zur Erzeugung von phasenverschobenen Signalen angeordnet sein.

EP 1 777 525 A1

Fig.2

**Beschreibung**

Die Erfindung bezieht sich auf eine Messeinheit zur Messung von Bewegungen im Luftspalt zwischen einem sich bewegenden und einem stillstehenden Maschinenteil einer fremderregten elektrischen Maschine, insbesondere zur Messung von Bewegungen des sich bewegenden Maschinenteiles im Luftspalt zwischen ihm und dem stillstehenden Maschinenteil einer Rotations- oder Linearmaschine.

Beim Betrieb von Elektromotoren, insbesondere bei hochwertigen Anwendungen, ist es in der Regel nötig, deren Rotorpositionen oder Drehzahlen zu messen. Dies geschieht mittels Positionsgebern oder Tachogeneratoren, die mechanisch mit der Motorwelle verbunden sein müssen. Diese Messwertgeber sind empfindliche und aufwendige Instrumente, die zudem noch zusätzlichen und oft knappen Einbauraum benötigen.

Es ist Aufgabe der Erfindung, die Messanordnung wirtschaftlicher und insbesondere so zu gestalten, dass sie praktisch keinen eigenen Einbauraum benötigt.

Die gestellte Aufgabe ist gelöst mit einer Messeinheit zur Messung von Bewegungen im Luftspalt zwischen einem sich bewegenden Maschinenteil und einem zugehörigen stillstehenden Maschinenteil einer fremderregten elektrischen Maschine, insbesondere zur Messung von Bewegungen des sich bewegenden Maschinenteils im Luftspalt zwischen ihm und dem stillstehenden Maschinenteil einer Rotations- oder Linearmaschine, bestehend aus einer im Luftspalt angeordneten Schaltungsfolie, die mit einer Wicklung versehen ist, die als Messwicklung wirkt, zum Aufnehmen von durch sich bewegende Maschinenteile induzierten Messdaten, die zur Steuerung bzw. Regelung der Bewegungen eingesetzt werden können.

Bevorzugte Ausführungsformen sind Gegenstand der weiteren Ansprüche oder nachfolgend beschrieben.

Wenn die Schaltungsfolie mit ihrer Wicklung im Luftspalt angeordnet ist, dann wird für die Regelzwecke kein besonderer Einbauraum benötigt. Außerdem werden die magnetischen Teile des Motors auch zum Induzieren von Spannungen in der Wicklung benutzt.

Für die Positionsgabe oder Drehzahlermittlung werden also keine weiteren Teile benötigt. Das stellt ein erhebliches Einsparpotential dar.

Nach einer weiteren Ausgestaltung der Erfindung ist vorgesehen, dass die Wicklung eine flache Einebenenwicklung ist. Eine solche Einebenenwicklung beansprucht nur minimalen Raum im Luftspalt.

Nach einer weiteren Ausgestaltung der Erfindung ist vorgesehen, dass die flache Einebenenwicklung aus einzelnen Spulen aufgebaut ist, die als konzentrische Einlagenspulen ausgeführt sind und alle in einer Ebene liegen.

Dies gilt auch, wenn nach einer weiteren Ausgestaltung der Erfindung die Einebenenwicklung mehrsträngig ausgebildet ist.

Unter der Einebenenwicklung ist also ein Wicklungsaufbau zu verstehen, bei dem sowohl bei einsträngigen als auch mehrsträngigen Wicklungen alle Spulen, also die Spulen aller verwendeten Stränge, in einer Ebene liegen.

Die Einbringung von Bauteilen in den Luftspalt von elektrischen Maschinen ist an sich problematisch. Zur Erreichung guter Motoreigenschaften wird nämlich ein kleiner Luftspalt angestrebt. Dem steht das Einbringen von Bauteilen, wie Messwicklungen klar entgegen. Wenn die Dimension der Wicklung aber auf die Dimension einer Folienwicklung reduziert ist, dann ist damit eine Ausgestaltung gefunden, die gegenüber normalen Luftspaltweiten keine oder zumindest keine signifikante Vergrößerung erfordert.

Nach einer weiteren Ausgestaltung der Erfindung ist vorgesehen, dass alle Spulen auf der einen Folienseite und die Verbindungen zwischen den zu verbindenden, innenliegenden Spulenenden auf der anderen Folienseite vorgesehen sind.

Nach einer weiteren Ausgestaltung der Erfindung ist vorgesehen, dass die Spulen der Einebenenwicklung so aufgebaut und zueinander angeordnet sind, dass in den Wicklungssträngen gleichphasige Spannungen induziert werden.

Nach einer weiteren Ausgestaltung der Erfindung ist vorgesehen, dass mehrere Wicklungsstränge so miteinander verbunden sind, dass eine möglichst große Wechselspannung induziert wird. Dies bedeutet ganz allgemein eine geeignete Reihenschaltung der Strangspannungen.

Nach einer weiteren Ausgestaltung der Erfindung ist vorgesehen, dass die Einebenenwicklung drei symmetrische Stränge aufweist. Die Zahl der Wicklungsstränge ist allerdings nicht auf drei beschränkt. Häufig werden auch fünf, sieben und neun Wicklungsstränge eingesetzt. Dies ist u. a. abhängig vom Durchmesser der Maschine.

Zu beachten ist für die Spannungsinduzierung in den Spulen der Einebenenwicklung die Flussverkettung mit dem Magnetfeld, dessen Wirkung die Spulen detektieren sollen.

Das Wirkprinzip des Zusammenwirkens von Magnetfeld und Einebenenwicklung ist dabei so gestaltet, dass die nebeneinander liegenden Einzelspulen in sich nebeneinander wiederholender Folge zu Gruppen verbunden sind, die die Wicklungsstränge bilden.

Nach einer weiteren Ausgestaltung der Erfindung ist vorgesehen, dass bei drei symmetrischen Strängen diese so verschaltet sind, dass zwei um $\pi/2$ phasenverschobene Spannungen als Messspannungen zur Verfügung stehen. Das wird dadurch erreicht, das die Differenz zweier Strangspannungen die eine Messspannung bildet und die verbleibende Strangspannung die zweite Messspannung liefert.

Nach einer weiteren Ausgestaltung der Erfindung ist vorgesehen, dass die Windungszahl der Spulen der einzelnen Stränge so gewählt ist, dass die zwei um $\pi/2$ phasenverschobene Spannungen ein beabsichtigtes Amplitudenverhältnis haben. So kann erreicht werden, dass die Amplituden gleich groß werden.

Nach einer weiteren Ausgestaltung der Erfindung ist vorgesehen, dass die Schaltungsfolie an den Statorpolzähnen des Motors anliegt und sich längs des Luftspaltes erstreckt.

Die Maschinenfelder im Luftspalt, und zwar das Feld des stillstehenden Maschinenteiles, also das Stator- oder Ankerfeld, und das Feld des beweglichen Maschinenteiles, also das Rotor- oder Erregerfeld, wirken beide auf die Wicklungen der Schaltungsfolien; sie induzieren in deren Spulen Spannungen. Das Stator- oder Ankerfeld beeinträchtigt aber die den Wicklungen entnommenen Messdaten nicht, weil das Ankerfeld klein ist gegenüber dem Erregerfeld. Zudem wirkt das Ankerfeld nur mit seinem Luftspaltanteil. Auch weist die vom Ankerfeld induzierte Spannung im Bemessungsbetrieb gegenüber der vom Erregerfeld induzierten Spannung eine Phasenverschiebung von $\pi/2$ auf.

Die Erfindung wird anhand der Zeichnung näher erläutert. Es zeigen:

Fig. 1 das Prinzip der Einebenenwicklung einer Messeinheit zur Generierung von Bewegungs- oder Positionsdaten einer elektrischen Maschine,

Fig. 2 ein Ausführungsbeispiel der Messeinheit, die aus einer Schaltungsfolie besteht, an der eine dreisträngige Einebenenwicklung angeordnet ist, mit den Spulen auf in der Zeichnung vorn liegenden Folienseite und den Spulenverbindungen auf der rückseitigen Folienseite,

Fig. 3 eine Prinzipdarstellung eines Rotationsmotors mit einer in den Luftspalt eingelegten Schaltungsfolie,

Fig. 4 die Messeinheit mit einer Schaltung der Folienwicklung, bei der die Messspannung durch Addition erhöht wird,

Fig. 5 die Messeinheit mit einer Schaltung der Folienwicklung, bei der zwei um $\pi/2$ phasenverschobene Messspannungen zur Verfügung stehen.

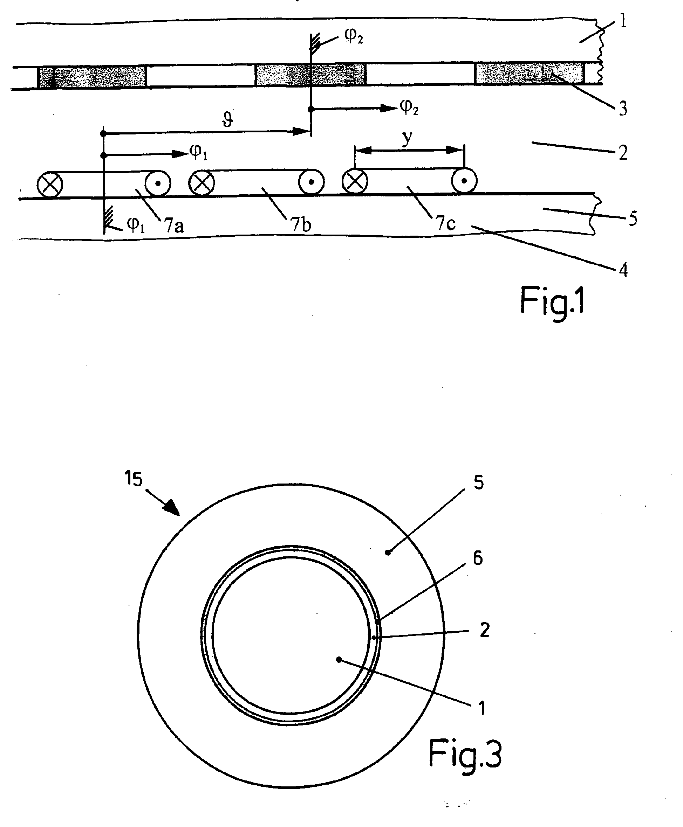

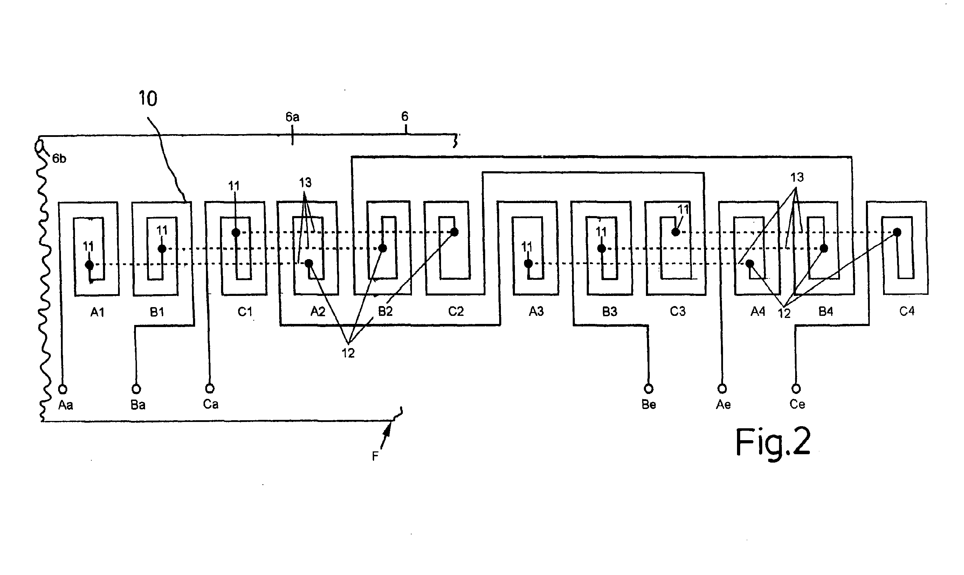

In Fig. 1 ist das Prinzip einer Einebenenwicklung 10 (siehe Fig. 2) dargestellt, die zu einer Messeinheit F (Fig. 2) gehört, die der Detektion von Maschinenbewegungen dient und die im Luftspalt einer elektrischen Maschine angeordnet ist. Die elektrische Maschine kann eine Linearmaschine oder eine Rotationsmaschine sein. Auch kann die Rotationsmaschine Maschine eine Innenläufer- oder Außenläufermaschine sein. Der bewegliche Maschinenteil, beispielsweise der abgewickelte Rotor 1 hat am Luftspalt 2 Pole 3.

Den Polen 3 liegt die Wicklung 4 des stillstehenden Maschinenteils (das ist die Ankerwicklung), Stator 5, gegenüber, der ebenfalls abgewickelt dargestellt ist. An einer in Fig. 2 dargestellten Schaltungsfolie 6 sind, beispielsweise in Ätztechnik, Spulen 7a, 7b, 7c ausgebildet. Diese Spulen 7a, 7b, 7c sind in Fig. 2 als konzentrische Einlagenspulen zu erkennen. In Fig. 1 sind die Spulen 7a, 7b, 7c zur Erläuterung des Prinzips nur durch eine Windung repräsentiert.

Die in Fig. 1 nebeneinander liegenden Einzelspulen 7a, 7b, 7c symbolisieren die ersten drei Spulen einer Gruppe einer dreisträngigen Wicklung. In der in Fig. 2 dargestellten Schaltung folgen nebeneinander vier solche Dreiergruppen im sich wiederholenden Turnus aufeinander. Alle Spulen 7a der vier Gruppen gehören zu einem ersten Strang A, alle Spulen 7b der vier Gruppen zu einem zweiten Strang B und alle Spulen 7c der vier Gruppen zu einem dritten Strang C. Die Zahl der Stränge ist nicht auf drei beschränkt. Es sind auch Wicklungen mit 5, 7 und 9 Strängen möglich. Dies hängt u.a. von der Dimension, der Größe der Maschine ab. Ganz allgemein gibt es m Stränge mit je $K_{WA} \cdot p_1$ Gruppen.

Bei der Prinzipdarstellung der Einebenen-Wicklung nach Fig. 1 im Koordinatensystem ist mit $\varphi_1 = 0$ das Zentrum der ersten Spule des ersten Stranges dargestellt; $\varphi_2 = 0$ ist das Zentrum des ersten Nordpols vom Erregerfeld; $\vartheta$ markiert den Stellungswinkel des Erregerteils; mit y ist die Spulenweite der Messspulen angegeben.

Für die Verbindungen der Spulen $\rho$ des Stranges k mit

$$\rho = \begin{cases} 1, 2, 3, \ldots, p_1 & \text{für Wicklungen mit einer Spule pro Polpaar, } k_{WA} = 1 \\ 1, 2, 3, \ldots, 2p_1 & \text{für Wicklungen mit einer Spule pro Pol, } k_{WA} = 2 \end{cases}$$

k=1,2,3, ..., m

ist die Flussverkettung der Spule (ρ, k) mit der $\mu$-ten Feldwelle des zu detektierenden Feldes maßgeblich gemäß

$$
{}^{\mu}\Psi_{f,(\rho,k)} = {}^{\mu}\hat{\Psi}_{f,Sp} \cdot cos\left[\mu\vartheta - \frac{2\pi}{k_{WA}}\frac{\mu}{\rho_1}(\rho-1) - \frac{2\pi}{m}\frac{\mu}{\rho_1}(k-1)\right],
$$

mit $\mu = p_f (2b+1)$, $b = 0, 1, 2, 3, ..., b_{max}$,

$\mu$ ... Wellenzahlen des Erregerfeldes,

$p_f$ ... Polpaarzahl des Erregergrundfeldes, durch den Motor bestimmt,

$p_1$ ... Polpaarzahl der Messwicklung.

Hieraus folgt dann schließlich die von der $\mu$-ten Feldwelle im k-ten Strang der Folienwicklung induzierte Spannung ${}^{\mu}u_{meß,k}$, die vom Anwender als Messsignal genutzt werden soll, sich zu

$$
{}^{\mu}u_{meß,k} = -\mu\,\Omega\,{}^{\mu}\hat{\Psi}_{f,k} \cdot sin\left[\mu\vartheta - \frac{\mu}{p_1}(k-1)\frac{2\pi}{m}\right] \qquad\qquad (a)
$$

$$
= -\mu\,\Omega\,{}^{\mu}\hat{\Psi}_{f,k} \cdot sin\left[\mu\Omega t + \mu\vartheta_0 - \frac{\mu}{p_1}(k-1)\frac{2\pi}{m}\right] . \qquad\qquad (b)
$$

ergibt. In der Formulierung (a) steht $\Omega$ für die (beliebig zeitabhängige) mechanische Winkelgeschwindigkeit; in (b) steht $\Omega$ für die konstante mechanische Winkelgeschwindigkeit gemäß $\vartheta(t) = \Omega \cdot t + \vartheta_0$.

Die Formeln (a) und (b) zeigen die Nutzungsmöglichkeiten der mittels der Folienspulen gemessenen Spannungen:

- Die Spannungsamplitude ist der Winkelgeschwindigkeit proportional; somit ist das Messsignal "Spannungsamplitude" ein Maß für die interessierende Größe "Winkelgeschwindigkeit".
- Der Funktionsverlauf wird durch die Rotorstellung bestimmt, ist somit ein Maß für die Position. Bei konstanter Winkelgeschwindigkeit ist die Frequenz des Messsignals ein Maß für die Winkelgeschwindigkeit bzw. Drehzahl.

Die Kriterien bzw. Regeln zur Ausgestaltung der Messwicklung bzw. zur Anpassung an den Motor, in dessen Luftspalt sie eingebaut wird, lauten wie folgt:

1. Zunächst ist die Polpaarzahl $p_1$ der Messwicklung beliebig; eine gute Induktionswirkung wird erzielt für

$$
p_f / p_1 = \begin{cases} ganzzahlig & \text{für } K_{WA} = 1, \text{ d.h. } p_1 \text{ Spulen pro Strang,} \\ ungeradzahlig & \text{für } K_{WA} = 2, \text{ d.h. } 2p_1 \text{ Spulen pro Strang.} \end{cases}
$$

2. Die Spulenweite y der Messwindungen ist zunächst nur durch eine Geometriebedingung, wonach y kleiner als der Bruch $2\pi/(K_{WA}\,p_1\,m)$ sein muss, eingeschränkt. Ein gutes Resultat erzielt man, falls der Ausdruck "$\mu \cdot y / 2$" etwa so groß wie "$\pi/2$" wird.

In Fig. 2 ist die Messeinheit F dargestellt. Diese besteht aus der Folie 6 und den auf ihrer einen Seite, beispielsweise der Vorderseite 6a angeordneten Gruppen von Folienspulen 7a, 7b, 7c. Zu dieser Spulenkonfiguration gehören im Ausführungsbeispiel drei Wicklungsstränge A,B,C der Messwicklung. Der Motor hat zwanzig Erregerpole ($p_f =10$). Die Zahl der Polpaare der Motorwicklung ist $p_1 =2$. Die Zahl der Wicklungsstränge m ist in diesem Fall also gleich 3. Diese drei Wicklungsstränge A, B, C bestehen aus einzelnen Folienspulen, die zu Gruppen nebeneinander

4

angeordnet sind. Da es sich im vorliegenden Fall um eine vierpolige Messwicklung handelt, gibt es vier Folienspulen pro Strang. In der Darstellung sind zwei Windungen pro Folienspule (N=2) angenommen. Weiterhin ist angenommen, dass jede Folienspule dieselbe Anzahl von Windungen hat. Grundsätzlich ist die Anzahl der Windungen pro Folienspule frei. Im Allgemeinen wird die Anzahl so hoch ausgeführt, wie es konstruktiv, geometrisch und technologisch möglich ist. Auch kann es sinnvoll sein, eine ungleichmäßige Anzahl von Windungen pro Spule zu wählen.

Bei dem Ausführungsbeispiel nach der Fig. 2 folgt auf eine Gruppe von Folienspulen 7a, 7b, 7c, jetzt zur Verdeutlichung der Konfigurationsregel mit A1, B1, C1 bezeichnet, eine Gruppe mit den Folienspulen A2, B2, C2. Es geht weiter mit der Gruppe A3, B3, C3. Die bei diesem Ausführungsbeispiel letzte Gruppe hat die Spulen A4, B4, C4. Das gilt für alle vier Gruppen. Alle Folienspulen sind in einer Ebene auf der Vorderseite 6a angeordnet. Die Folienspulen sind beispielsweise in Ätztechnik gebildet. Die Folienspulen der Einebenenwicklung 10 haben innenliegende Enden 11 und 12. Diese innenliegenden Enden sind von der Gruppe mit dem Index 1 zur Gruppe mit dem Index 2 auf der abliegenden Folienseite 6b verbunden. Die rückseitigen Verbindungen 13 sind gestrichelt dargestellt; auch sie werden beispielsweise in Ätztechnik gebildet. Dadurch können alle Folienspulen und Endverbindungen auf der Folienseite 6a frei gestaltet werden. Die Stranganfänge sind mit Aa, Ba und Ca bezeichnet. Entsprechend sind die Strangenden mit Ae, Be und Ce bezeichnet.

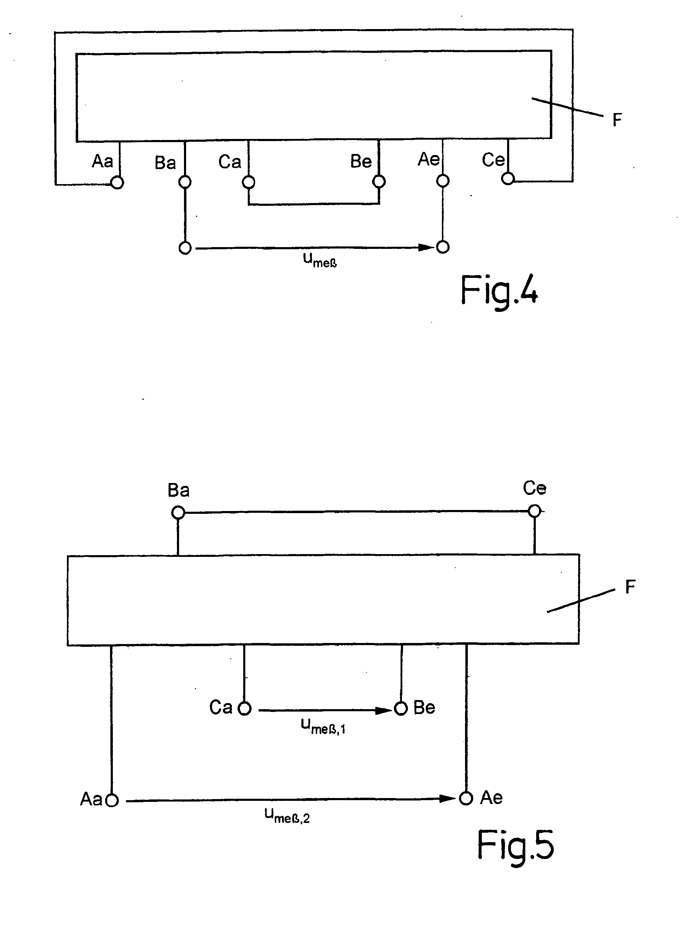

Fig. 3 zeigt, wie die Schaltungsfolie 6 in einen Elektromotor 15 einbaubar ist. Die Zeichnung zeigt schematisch den Stator 5 mit der Ankerwicklung 4 und den Rotor 1. Zwischen dem Stator 5 und dem innerhalb von ihm befindlichen Rotor 1 befindet sich der Luftspalt 2. In diesem Luftspalt 2 ist an dem Stator 5, bzw. an seinen nicht dargestellten Polzähnen anliegend, die Schaltungsfolie 6 angeordnet; sie benötigt nur sehr wenig Einbauraum.

Mehrere Wicklungsstränge (A, B, C, ...) können so miteinander verbunden sein, daß eine möglichst große Wechselspannung induziert wird. Dies bedeutet ganz allgemein eine geeignete Reihenschaltung der Strangspannungen. Für Ausführungen, bei denen in den m Strängen gleichphasig schwingende Spannungen induziert werden

$$( \mu \,/\, p_1 \; m = ganzzahlig ),$$

beträgt die Messspannung dann das m-fache der Strangspannung. Für Ausführungen, bei denen in den m Strängen phasenverschobene Spannungen induziert werden, ergibt sich die Messspannung durch "geometrische Addition" der Strangspannungen.

Figur 4 zeigt ein Ausführungsbeispiel für eine dreisträngige (m = 3) Wicklung gemäß Figur 2. Der Eingang Aa ist mit Ausgang Ce verbunden. Der Eingang Ca ist mit dem Ausgang Be verbunden. Zwischen dem Eingang Ba und dem Ausgang Ae kann dann die Messspannung $_{UMess}$ abgegriffen werden. Mit dieser Schaltung ist dabei zugleich dafür Sorge getragen, dass keine Kreuzungen der Verbindungen auftreten, d. h., dass die Verbindungen in einer Ebene ausgeführt werden können, was für die Ätztechnik besonders vorteilhaft ist. Natürlich können die Strangverbindungen nach Figur 4 in beliebig anderer Technologie ausgeführt werden.

Bei einer anderen Anwendungsform können beispielhaft zu betrachtende drei symmetrische Stränge (A, B, C) so verschaltet sein, dass zwei um $\pi\,/\,2$ phasenverschobene Spannungen als Messspannungen $u_{Mess,1}$ und $u_{Mess,2}$ zur Verfügung stehen. Das wird dadurch erreicht, indem die Differenz zweier Strangspannungen die eine Messspannung bildet und die verbleibende Strangspannung die zweite Messspannung liefert. Figur 5 zeigt ein Ausführungsbeispiel, bei dem eine dreisträngige Messwicklung in der Art der Figur 2 vorhanden ist. Um zu den zwei um $\pi\,/\,2$ phasenverschobenen Spannungen zu kommen, sind der Eingang Ba und der Ausgang Ce miteinander verbunden. Es können dann abgegriffen werden:

Die Spannung $u_{Mess,1}$ zwischen dem Eingang Ca und dem Ausgang Be. Die Spannung $u_{Mess,2}$ zwischen dem Eingang Aa und dem Ausgang Ae. Damit ist dafür Sorge getragen, dass keine Kreuzungen der Verbindungen auftreten, d. h., dass die Verbindungen in einer Ebene ausgeführt werden können, was für die Ätztechnik besonders vorteilhaft ist. Natürlich können die nötigen Verbindungen bzw. Zuleitungen in beliebiger Technologie ausgeführt werden, ohne das Ziel, zwei um $\pi\,/\,2$ verschobene Spannungen zu generieren, zu gefährden.

Die Windungszahlen der Spulen der einzelnen Stränge A,B,C können so gewählt sein, dass die zwei um $\pi/2$ phasenverschobenen Spannungen ein beabsichtigtes Amplitudenverhältnis haben. So werden beispielsweise die Amplituden der Messspannungen gleich, wenn die Windungszahl desjenigen Stranges, der die eine Messspannung liefert, Wurzel Drei mal so groß ist wie die Windungszahl der beiden übrigen Stränge, deren Differenzspannung die zweite Messspannung ergibt.

**Patentansprüche**

1. Messeinheit zur Messung von Bewegungen im Luftspalt zwischen einem sich bewegenden Maschinenteil (1) und einem zugehörigen stillstehenden Maschinenteil (5) einer fremderregten elektrischen Maschine, insbesondere zur Messung von Bewegungen des sich bewegenden Maschinenteils (1) im Luftspalt (2) zwischen ihm und dem stillstehenden Maschinenteil (5) einer Rotations- oder Linearmaschine, umfassend oder bestehend aus einer im Luftspalt (2) angeordneten Schaltungsfolie (6), die mit einer Wicklung (10) versehen ist, die als Messwicklung wirkt, für vom sich bewegenden Maschinenteil (1) in sie induzierte Messdaten, die insbesondere zur Steuerung bzw. Regelung der Bewegung(en) eingesetzt werden.

2. Messeinheit nach Anspruch 1, **dadurch gekennzeichnet, dass** die Wicklung eine flache Einebenenwicklung (10) ist.

3. Messeinheit nach Anspruch 1 und/oder 2, **dadurch gekennzeichnet, dass** die Wickelung (10) / flache Einebenenwicklung (10) aus einzelnen Spulen (7) aufgebaut ist, die als konzentrische Einlagenspulen (7) ausgeführt sind und alle in einer Ebene liegen.

4. Messeinheit nach einem oder mehreren der vorhergehenden Ansprüche, **dadurch gekennzeichnet, dass** die Einebenenwicklung (10) mehrsträngig ausgebildet ist.

5. Messeinheit nach einem oder mehreren der Ansprüche 1 bis 3, **dadurch gekennzeichnet, dass** alle Spulen (7) auf der einen Folienseite (6a) und die Verbindungen (13) zwischen den zu verbindenden, innenliegenden Spulenenden (11,12) auf der anderen Folienseite (6b) vorgesehen sind.

6. Messeinheit nach einem oder mehreren der vorhergehenden Ansprüche, **dadurch gekennzeichnet, dass** die Spulen (7) der Einebenenwicklung (10) so aufgebaut und zueinander angeordnet sind, dass in den Wicklungssträngen (A,B,C, ...) gleichphasige Spannungen induziert werden.

7. Messeinheit nach einem oder mehreren der vorhergehenden Ansprüche, **dadurch gekennzeichnet, dass** mehrere Wicklungsstränge (A,B,C,...) so miteinander verbunden sind, dass eine möglichst große Wechselspannung induziert wird.

8. Messeinheit nach einem oder mehreren der vorhergehenden Ansprüche, **dadurch gekennzeichnet, dass** die Einebenenwicklung (10) drei symmetrische Stränge (A,B,C) aufweist, deren innere Wicklungsenden (11,12) miteinander verbunden sind.

9. Messeinheit nach einem oder mehreren der vorhergehenden Ansprüche, **dadurch gekennzeichnet, dass** die nebeneinander liegenden Einzelspulen (7a,7b,7c) in sich nebeneinander wiederholender Folge zu Gruppen verbunden sind, die die Wicklungsstränge (A,B,C) bilden.

10. Messeinheit nach einem oder mehreren der vorhergehenden Ansprüche, **dadurch gekennzeichnet, dass** bei drei symmetrischen Strängen (A, B, C) diese so verschaltet sind, dass zwei um $\pi / 2$ phasenverschobene Spannungen als Messspannungen $u_{Mess,1}$ und $u_{Mess,2}$ zur Verfügung stehen.

11. Messeinheit nach einem oder mehreren der vorhergehenden Ansprüche, **dadurch gekennzeichnet, dass** die Windungszahl der Spulen der einzelnen Stränge (A,B,C) so gewählt ist, dass die zwei um $\pi/2$ phasenverschobenen Spannungen ein beabsichtigtes Amplitudenverhältnis haben.

12. Messeinheit nach einem oder mehreren der vorhergehenden Ansprüche, **dadurch gekennzeichnet, dass** die Schaltungsfolie (6) an den Statorpolzähnen des Stators (5) anliegt und sich längs des Luftspaltes (2) erstreckt.

13. Fremderregte elektrische Maschine, insbesondere Rotations- oder Linearmaschine, aufweisend die Messeinheit nach einem oder mehreren der vorhergehenden Ansprüche.

14. Verwendung der Messeinheit nach einem oder mehreren der Ansprüche 1 bis 12 zur Bestimmung der Rotorposition und/oder der Drehzahl.

Fig.1

Fig.3

Fig.2

Fig.4

Fig.5

**Europäisches Patentamt**

# EUROPÄISCHER RECHERCHENBERICHT

**Nummer der Anmeldung**

EP 06 02 2090

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 200 537 A2 (MATSUSHITA ELECTRIC IND CO LTD [JP]) 5. November 1986 (1986-11-05) | 1-3 | INV. G01P3/487 |
| Y | * Seite 17, letzter Absatz - Seite 20, Absatz 1; Abbildungen 9-12 * | 1-14 | G01P3/488 G01P3/46 H02K23/66 |
| Y | EP 1 180 847 A1 (JOHNSON ELECTRIC SA [CH]) 20. Februar 2002 (2002-02-20) * Absätze [0015] - [0020]; Abbildungen 1-5 * | 1-14 | H02K29/14 H02K29/12 G01D5/20 |
| Y | DE 195 05 543 A1 (WILO GMBH [DE]) 22. August 1996 (1996-08-22) * Spalte 2; Abbildungen 1,3 * | 3-7, 12-14 | |
| Y | DE 101 30 130 A1 (MINEBEA CO.) 16. Januar 2003 (2003-01-16) * Absätze [0025] - [0052]; Abbildungen 3,6 * | 4,8-10 | |
| Y | EP 0 452 551 A2 (SIEMENS AG [DE]) 23. Oktober 1991 (1991-10-23) * Zusammenfassung * * Spalte 4, Zeile 19 - Spalte 5, Absatz 1; Abbildung 3 * | 3,4,7,12 | RECHERCHIERTE SACHGEBIETE (IPC) G01P H02K G01D |
| Y | FR 2 655 735 A1 (SKF FRANCE [FR]) 14. Juni 1991 (1991-06-14) * Zusammenfassung; Abbildungen 3,4 * | 1,2,4,12 | |
| Y | EP 1 164 358 A1 (AMO AUTOMATISIERUNG MESSTECHNI [AT]) 19. Dezember 2001 (2001-12-19) * Absätze [0018] - [0020], [0025] - [0027], [0054]; Ansprüche 1-3; Abbildungen 11-14 * | 9-11 | |

Der vorliegende Recherchenbericht wurde für alle Patentansprüche erstellt

| Recherchenort | Abschlußdatum der Recherche | Prüfer |
|---|---|---|
| München | 21. Februar 2007 | Felicetti, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**   EP 06 02 2090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2007

| Im Recherchenbericht angeführtes Patentdokument | | Datum der Veröffentlichung | Mitglied(er) der Patentfamilie | | Datum der Veröffentlichung |
|---|---|---|---|---|---|
| EP 0200537 | A2 | 05-11-1986 | KEINE | | |
| EP 1180847 | A1 | 20-02-2002 | BR | 0103572 A | 26-03-2002 |
| | | | CN | 1339863 A | 13-03-2002 |
| | | | DE | 60117487 T2 | 12-10-2006 |
| | | | ES | 2258512 T3 | 01-09-2006 |
| | | | JP | 2002101617 A | 05-04-2002 |
| | | | MX | PA01008335 A | 09-04-2002 |
| | | | US | 2002047349 A1 | 25-04-2002 |
| DE 19505543 | A1 | 22-08-1996 | KEINE | | |
| DE 10130130 | A1 | 16-01-2003 | CN | 1518666 A | 04-08-2004 |
| | | | WO | 03001216 A1 | 03-01-2003 |
| | | | EP | 1397691 A1 | 17-03-2004 |
| | | | JP | 2004537048 T | 09-12-2004 |
| | | | US | 2004232873 A1 | 25-11-2004 |
| EP 0452551 | A2 | 23-10-1991 | DE | 4012546 A1 | 24-10-1991 |
| | | | US | 5229696 A | 20-07-1993 |
| FR 2655735 | A1 | 14-06-1991 | KEINE | | |
| EP 1164358 | A1 | 19-12-2001 | AT | 302937 T | 15-09-2005 |
| | | | DE | 50011024 D1 | 29-09-2005 |
| | | | JP | 2002039793 A | 06-02-2002 |
| | | | US | 2002017902 A1 | 14-02-2002 |

EPO FORM P0461

Für nähere Einzelheiten zu diesem Anhang : siehe Amtsblatt des Europäischen Patentamts, Nr.12/82